# EUROPÄISCHE PATENTANMELDUNG

(11) **EP 3 117 900 A2**
(43) Veröffentlichungstag der Anmeldung: **18.01.2017**
(21) Anmeldenummer: 16171903.4
(22) Anmeldetag: 30.05.2016
(51) Int. Cl.: B01J 20/10, B01J 20/28, B01J 20/32, C01C 1/00, F17C 11/00

(54) **MATERIAL ZUR SPEICHERUNG VON AMMONIAK UND VERWENDUNG DES MATERIALS IN EINEM AMMONIAKSPEICHER**

(30) Priorität: 17.07.2015 DE 102015213437
(71) Anmelder: ROBERT BOSCH GMBH, 70442 Stuttgart (DE)
(72) Erfinder: Widenmeyer, Markus, 71101 Schoenaich (DE); Gloeckle, Markus, 70192 Stuttgart (DE)

(57) **Zusammenfassung**

Die Erfindung bezieht sich auf ein Material (10) und dessen Verwendung zur Speicherung von Ammoniak (NH₃) in einem Kraftfahrzeug mit NH₃-basiertem, eine selektive katalytische Reduktion ermöglichenden Abgas-Nachbehandlungssystem. Das Material (10) befindet sich in einem Ammoniak-Tank, und weist Poren (12) auf, die einen realen Porendurchmesser (14) im Bereich zwischen 1,5 nm und 10 nm aufweisen, in denen Ammoniak bei reduziertem Druck gespeichert ist.

## Beschreibung

### Technisches Gebiet

Die vorliegende Erfindung bezieht sich auf ein Material zur Speicherung von Ammoniak in einem Ammoniakspeicher, insbesondere für Kraftfahrzeuge, die ein auf dem Einsatz von Ammoniak basierendes Abgasnachbehandlungssystem im Wege der selektiven katalytischen Reaktion aufweisen.

### Stand der Technik

Bei Katalysatoren, die gemäß dem Verfahren der selektiv-katalytischen Reduktion von Stickoxiden arbeiten und die bei Verbrennungskraftmaschinen mit magerem Abgas wirkungsvoll betrieben werden können, ist eine Bereitstellung eines Reduktionsmittels, insbesondere von Ammoniak (NH₃) erforderlich. Meistens wird Ammoniak in diesen Anwendungsfällen insbesondere als eine Harnstoff-Wasserlösung dargeboten. In verschiedenen Ausführungsformen wird die Harnstoff-Wasserlösung als Reduktionsmittel direkt in den Abgasstrang der Verbrennungskraftmaschine eindosiert. Dabei können sich im Einzelfall Ablagerungen in diesem bilden, die das Strömungsverhalten des Abgases negativ beeinflussen und andere unerwünschte Nebenwirkungen aufweisen.

Ammoniak kann unmittelbar in einem Speicher bevorratet und aus diesem nach Bedarf in den Abgasstrang eindosiert werden. Aus DE 10 2008 003 846 A1 ist beispielsweise eine Vorrichtung zur Bereitstellung von Ammoniak bekannt. Gemäß dieser Lösung handelt es sich um einen chemischen Speicher, welcher durch Energie oder Feuchtigkeitszufuhr Ammoniak direkt freisetzt. Bei der Lösung gemäß DE 10 2008 003 846 A1 umfasst die Vorrichtung zur Bereitstellung von Ammoniak ein Reservoir mit einer Vorstufe zur Bildung von Ammoniak, bei dem zunächst Wasser in das Reservoir zugegeben wird. Das Wasser wird mit der Vorstufe zur Bildung von Ammoniak zu Ammoniak umgesetzt und es wird ein Ammoniak enthaltender Stoffstrom aus dem Reservoir entnommen. Weiterhin geht aus DE 10 2008 003 846 A1 eine Vorrichtung zur Bereitstellung von Ammoniak hervor, welche ein Reservoir mit einer Vorstufe zur Bildung von Ammoniak aufweist, wobei mindestens ein Zulauf zur Zufuhr eines Wasser enthaltenden Stoffstroms und mindestens ein Ablauf zur Abfuhr eines Ammoniak enthaltenden Stoffstromes in das Reservoir münden.

Nachteilig bei diesen Vorrichtungen sind zum Beispiel deren Feuchtigkeitsempfindlichkeit oder bei anderen chemischen Speichern der Umstand, dass sie lediglich Einweg-Lösungen darstellen und nach einer gewissen Betriebszeit zu ersetzen sind.

Eine Alternative zu chemischen Speichern sind Ammoniakdruckgasspeicher. Diese haben jedoch aufgrund der Giftigkeit des Ammoniaks ebenfalls ein hohes Betriebsrisiko.

Eine weitere Möglichkeit besteht in der Verwendung von Adsorbermaterialien wie beispielsweise Zeolithen. Deren Speicherdichte erscheint jedoch noch zu gering. Besser geeignet erscheinen metallorganische Netzwerke (MOFs: Metal Organic Frameworks), die in der Lage sind, bis zu 255 g NH₃ pro kg Speichermaterial aufzunehmen. Die genannten metallorganischen Netzwerke erscheinen jedoch sehr komplex aufgebaut und wenig kostengünstig zu realisieren sein.

### Darstellung der Erfindung

Erfindungsgemäß wird ein Material zur Speicherung von Ammoniak vorgeschlagen, wobei dieses Material Poren aufweist, deren Porendurchmesser bei frei von einer Funktionalisierung beschaffenen Porenwänden der Poren zwischen 1,5 nm und 10 nm liegt, in denen Ammoniak bei reduziertem Druck speicherbar ist. Das erfindungsgemäß vorgeschlagene Material ermöglicht eine Kapillarkondensation, wodurch der effektive Dampfdruck von Ammoniak um den Faktor zehn verringert wird, wodurch eine wesentlich gefahrlosere Handhabung des erfindungsgemäß vorgeschlagenen Materials gegeben ist, wobei dieses sich des Weiteren durch eine hohe Speicherdichte auszeichnet und kostengünstig herstellbar ist.

Bei dem erfindungsgemäß vorgeschlagenen Material mit Porendurchmessern von einigen nm, kondensieren Gase, so zum Beispiel das in Rede stehende Ammoniak, bei einem 0,2-fachen Partialdruck dessen, was ihrem Taupunkt entspricht. Je kleiner der Porendurchmesser ist, desto geringer ist der Druck, bei dem ein Gas in der Pore kondensiert. Daher ist es wichtig, Materialien zu verwenden, die einen relativ kleinen effektiven Porendurchmesser aufweisen.

Der erfindungsgemäß vorgeschlagenen Lösung folgend, beträgt der Porendurchmesser im erfindungsgemäß vorgeschlagenen Material bei frei von einer organischen oder anorganischen Funktionalisierung ausgeführten Porenwänden der Poren bevorzugt zwischen 2 nm und 5 nm. Nach einer Funktionalisierung der Porenwände liegt der Porendurchmesser zwischen 0,5 nm und 5 nm, bevorzugt zwischen 1,0 nm und 3,0 nm. Im vorliegenden Zusammenhang ist unter Funktionalisierung die Veränderung von Oberflächeneigenschaften eines Ausgangsmaterials, beispielsweise durch gezieltes Aufbringen oder Anbinden fest gebundener Verbindungen mit ihrerseits anderen Eigenschaften an eine Oberfläche zu verstehen, so dass eine derart modifizierte Oberfläche eines Ausgangsmaterials neue Eigenschaften im Vergleich zur ursprünglichen Oberfläche des Ausgangsmaterials aufweist. Neben einem nachträglichen Anbinden kann die derart modifizierte Oberfläche auch schon während der Synthese des Ausgangsmaterials generiert werden. Dazu werden Stoffe eingebracht, die sich nur an bestimmten Stellen in das Feststoffgitter des Ausgangsmaterials einbauen und durch die eine derartige Fehlordnung neue, innere Oberflächen des Ausgangsmaterials mit neuen Eigenschaften generieren. So kann beispielsweise durch das Anbinden bzw. Einbringen von sauren Verbindungen, die funktionalisierte Gruppen darstellen, an eine bzw. in eine basische Oberfläche die Ammoniakadsorptionsfähigkeit deutlich verbessert werden. Des Weiteren hat das erfindungsgemäß vorgeschlagene Material nach einer Funktionalisierung der Porenwände der Poren ein Porenvolumen von mindestens 0,3 cm³/g, bevorzugt mindestens 0,45 cm³/g und besonders bevorzugt ein Porenvolumen von mindestens 0,6 cm³/g. Durch die Funktionalisierung wird der Porendurchmesser - rein geometrisch betrachtet - gezielt beeinflussbar, was neben der oben genannten chemischen Veränderung auch einen Einfluss auf das Kondensationsverhalten hat.

Bei dem erfindungsgemäßen Material handelt es sich beispielsweise um ein solches, welches ein Grundgerüst aus anorganischem Oxid aufweist oder um ein Komposit aus anorganischem Oxid und organischen Gruppen. Ferner kann ein Material eingesetzt werden, dass -O₍₄₋ₓ₎Si(CH₃)ₓ-Gruppen aufweist. X kann dabei Werte von 1, 2 oder 3 annehmen. Es besteht auch die Möglichkeit, ein auf SiO₂-basierendes Material einzusetzen, welches im Gitter integrierte oder an der Oberfläche verbliebene -O₍₄₋ₓ₎Si(CH₃)ₓ aufweist.

Eine bevorzugte Ausführungsvariante des erfindungsgemäß vorgeschlagenen Materials ist durch ein periodisch mesoporöses Material gegeben, bevorzugt aus SiO₂, so zum Beispiel MCM-41, MCM-48, SBA-1 oder SBA-2. Die Periodizität bedingt ein großes Porenvolumen und eine enge Porenradienverteilung, welche eine sehr definierte Kapillarkondensation, d.h. einen engen Kapillarkondensationsbereich ermöglicht. Die Speicherdichte derartiger periodisch mesoporöser Materialien ist optimal, weil diese Materialien bei guter Qualität ausschließlich solche Poren aufweisen, die für die Ammoniakspeicherung als Flüssigphase benötigt werden.

Das erfindungsgemäß vorgeschlagene Material kann chemisch derart funktionalisiert werden, dass das Material eine Affinität zu Ammoniak hat. Die Funktionalisierungen lassen sich beispielsweise in einer ersten Ausführungsmöglichkeit dadurch realisieren, dass die Oberfläche der Porenwand des Materials mit polaren, hydrophilen Gruppen ausgestattet wird, bevorzugt mit der Fähigkeit, Wasserstoffbrückenbindungen zu bilden. Als Beispiele seien genannt: N-Aminoethyl-3-Aminopropyl-, Bis(N-Hydroxyethyl)-3-Aminopropyl-, N-Propyl-Gluconamid, Hydroxymethyl- oder Propyltrimethylammoniumchloride. Des Weiteren kann die Funktionalisierung des Materials dadurch erfolgen, dass in einer zweiten Ausführungsmöglichkeit die Oberfläche der Porenwand mit sauren Gruppen ausgestattet ist, so zum Beispiel Carbonsäuregruppen, Sulfon- oder Phosphonsäuregruppen. Weiterhin besteht auch die Möglichkeit, Aluminium-, Eisen(III)-Spezies, die auch als Kationsäuren fungieren oder Alumosilicatspezies einzusetzen.

In einer dritten Ausführungsmöglichkeit des Materials ist die Oberfläche der Porenwand mit Gruppen ausgestattet, die eine spezielle Bindung zu Ammoniak eingehen. Dabei kann es sich beispielsweise um Kobalt-, Nickel-, Kupfer- und Zinkspezies handeln.

In den beiden letztgenannten Fällen, d.h. bei der oben stehend skizzierten zweiten und dritten Ausführungsmöglichkeit, kann eine monomolekulare Schicht beispielsweise von Kupfer eingesetzt werden. Diese Kupferschicht kann beispielsweise über Atomic Layer Deposition, (ALD-Verfahren) oder mittels nasschemischer Imprägnierung aufgebracht werden.

Derartige Materialien können kostengünstig hergestellt werden. Im Falle periodisch mesoporöser Materialien sind neben einer Silica-Quelle wie Natrium-Wasserglas handelsübliche Tenside erforderlich.

Die Erfindung bezieht sich darüber hinaus auf einen Ammoniakspeicher, der das erfindungsgemäße Material aufweist, wobei der Ammoniakspeicher beheizbar ist, einen ersten Teiltank und einen zweiten Teiltank aufweist, wobei der erste Teiltank kleiner als der zweite Teiltank ist und der erste, kleiner dimensionierte Teiltank näher am Abgastrakt der Verbrennungskraftmaschine angeordnet ist, verglichen mit der Position, in welcher sich der zweite Teiltank des Ammoniakspeichers befindet.

Bei dem Ammoniakspeicher, der das erfindungsgemäße Material umfasst, liegt das Druckniveau derart, dass eine Kapillarkondensation des Ammoniaks begünstigt wird.

Das erfindungsgemäß vorgeschlagene Material wird in einem Ammoniakspeicher zur Speicherung von Ammoniak in der Flüssigphase eingesetzt, insbesondere an Abgasnachbehandlungssystemen von Verbrennungskraftmaschinen.

### Vorteile der Erfindung

Das erfindungsgemäß vorgeschlagene Material ermöglicht durch den Effekt der Kapillarkondensation die Verringerung des effektiven Dampfdruckes von Ammoniak zumindest um einen Faktor zehn. Dies ermöglicht eine wesentlich gefahrlosere Handhabung des Ammoniaks, das als Reduktionsmittel für die selektive katalytische Reaktion dient und das schon bei ca. 30°C niedrigeren Abgastemperaturen in den Abgasstrom eindosiert werden kann als dies mit einer Harnstoff-Wasserlösung möglich wäre. Des Weiteren zeichnet sich das erfindungsgemäß vorgeschlagene Material durch eine hohe Speicherdichte aus und ist zudem sehr kostengünstig realisierbar. Um das erfindungsgemäß vorgeschlagene Material an einem Ammoniakspeicher einzusetzen, befindet sich das Material in einem Tank, der insbesondere beheizt ist. Hat das Material beispielsweise ein Porenvolumen von 0,7 cm³/g, so kann 1 kg dieses Materials ungefähr 0,7 I flüssigen Ammoniak enthalten. Dies ist der in dem erfindungsgemäß vorgeschlagenen Material ablaufenden Kapillarkondensation zuzurechnen.

Ammoniak hat einen Dampfdruck von etwa 8 bar bei einer Temperatur von 20°C und einen Dampfdruck von ca. 40 bar bei einer Temperatur von 80°C. Bei Materialien, die kleine Poren in der Größenordnung von 2 nm und eine chemisch Ammoniak-affine funktionalisierte Porenwand aufweisen, findet zum Beispiel eine Kondensation bei 0,08-fachen des Kondensationsdruckes statt. Dies wäre bei einer Temperatur von 20°C etwa 0,64 bar und bei einer Temperatur von 80°C etwa 3,2 bar. Durch eine Beheizung des den Ammoniak bevorratenden Tanks während des Betriebs, kann der Ammoniakdruck auf einem angemessenen Niveau gehalten werden.

### Ausführungsbeispiel 1:

Ein MCM-48-Material (MCM-48: Mobil Composition of Matter No. 48) weist ohne Funktionalisierung ein Porendurchmesser von 0,6 nm, gemessen nach der Barrett-Joyner-Halenda Methode (BJH) auf. Es ist mit N-Aminoethyl-3-Aminopropyl-Gruppen funktionalisiert, so dass diese organische Gruppen etwa 15 % bis 20 % des Materialgewichts ausmachen.

### Ausführungsbeispiel 2:

Hier handelt es sich um ein MCM-48-Material, welches ohne Funktionalisierung Poren von 1,6 nm Durchmesser, gemessen nach BJH-Methode, aufweist. Die Porenwände sind primär mit Propylenbromid-Gruppen funktionalisiert, die an Siliciumatomen, welche in ein Gerüst eingebunden sind, hängen. Die Siliziumumgebung kann angegeben werden als Br(CH₂)₃(SiO)₃. Diese Propylenbromid-Gruppen sind wiederum mit 1-Amino-Propandiol-Gruppen funktionalisiert. Die genannten organischen Gruppen machen etwa 20 % des Materialgewichtes aus.

Der schlagende Vorteil der erfindungsgemäß vorgeschlagenen Lösung liegt darin, dass nunmehr ein Speichermaterial für reines NH₃ zur Verfügung steht, welches im Vergleich der bisher eingesetzten Harnstoff-Wasserlösung (AdBlue®) wesentlich höhere Speicherdichten zulässt.

### Kurze Beschreibung der Zeichnung

Anhand der Zeichnung wird die Erfindung nachstehend eingehender beschrieben.

Die einzige Figur zeigt einen Schnitt durch das erfindungsgemäß vorgeschlagene Material und dreier eingezeichneter Poren samt Bemaßung.

### Ausführungsformen der Erfindung

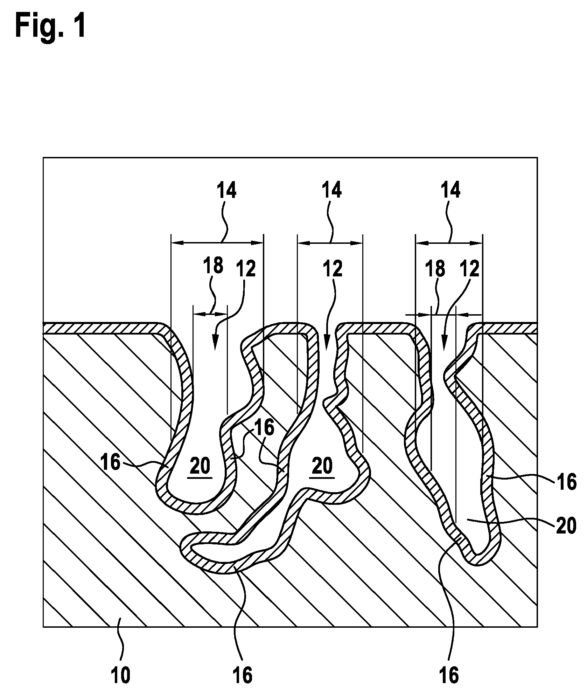

Figur 1 zeigt ein erfindungsgemäßes Material zur Speicherung von Ammoniak, vergleiche Bezugszeichen 10, in dem sich eine Vielzahl von Poren 12 befindet, von denen in der stark vergrößerten Darstellung gemäß Figur 1 drei exemplarisch dargestellt sind. Wie aus der Darstellung gemäß Figur 1 hervorgeht, ist ein realer Porendurchmesser der Poren 12 mit Bezugszeichen 14 kenntlich gemacht. Eine Porenwand, welche ein Porenvolumen 20 begrenzt, ist mit einer eine Funktionalisierung 16 darstellenden Schicht, welche weiter unten noch genauer beschrieben wird, versehen. Aufgrund der an den Porenwänden vorgesehenen Funktionalisierung 16, die die einzelnen Poren 12 begrenzt, ergibt sich ein vom realen Porendurchmesser 14 verschiedener Porendurchmesser 18 nach Durchführung der Funktionalisierung 16 der die Poren 12 begrenzenden Wänden. Mit Bezugszeichen 20 ist in schematischer Weise ein Porenvolumen angegeben.

Das in der einzigen Figur dargestellte Material 10 ermöglicht durch das Ausnutzen des Effektes der Kapillarkondensation die Herabsetzung des effektiven Dampfdruckes von Ammoniak (NH₃) zumindest um einen Faktor zehn, was eine wesentlich gefahrlosere Handhabung des Ammoniaks ermöglicht. Das Material 10 gemäß der Schnittdarstellung in Figur 1 zeichnet sich des Weiteren durch eine hohe Speicherdichte für Ammoniak aus und ist darüber hinaus äußerst kostengünstig herstellbar.

Das Material 10 weist eine Vielzahl von Poren 12 auf, die einen realen Porendurchmesser 14 von ungefähr 1,5 nm bis 10 nm aufweisen, so dass Ammoniak (NH₃) mit wesentlich reduziertem Druck gespeichert werden kann. Durch das Phänomen der Kapillarkondensation kann beispielsweise in periodisch mesoporösen Silicamaterialien (MCM-41 oder MCM-48) mit realen Porendurchmessern 14 von einigen nm eine Kondensation von Gasspezies bei einem 0,2-fachen Partialdruck dessen erfolgen, was ihrem Taupunkt entspricht. Bei der Bestimmung des Porenvolumens 20 und des realen Porendurchmessers 14 kann dies ausgenutzt werden. Je kleiner der reale Porendurchmesser 14 ist, ein desto geringerer Druck stellt sich ein, bei dem eine Gasspezies, so zum Beispiel in der Gasphase vorliegendes Ammoniak (NH₃), in die Pore 12 kondensiert.

Gemäß der Darstellung in Figur 1 ist eine Porenwand, welche die Poren 12 im Material 10 begrenzt, mit einer Funktionalisierung 16 versehen. Die Porenwand wird bevorzugt mit einer Funktionalisierung 16 versehen, die geeignet ist, eine sehr polare Spezies wie Ammoniak möglichst leicht in der Pore 12 kondensieren zu lassen, so dass die Porenwand mit ebenso polaren Gruppen versehen ist, oder mit Gruppen, die eine spezielle Bindung zu Ammoniak (NH₃) eingehen. Das Material 10, welches Poren 12 mit einem realen Porendurchmesser von 1,5 nm bis 10 nm, bevorzugt von 2 nm bis 5 nm aufweist, ist im Ausgangszustand ohne anorganische oder organische Funktionalisierungen 16 der Porenwand beschaffen. Der reale Porendurchmesser wird nach der Standard-BJH-Methode zuzüglich eines Korrekturbetrages von rund 1 nm ermittelt. Nach Durchführung der Funktionalisierung 16 liegt der Porendurchmesser 18 zwischen 0,5 nm und 5 nm, bevorzugt zwischen 1,0 nm und 3 nm. Das Material 10 weist nach Durchführung der Funktionalisierung 16 ein Porenvolumen 20 von mindestens 0,3 cm³/g, bevorzugt mindestens 0,4 cm³/g und besonders bevorzugt von mindestens 0,6 cm³/g auf.

Bei dem Material 10 kann es sich bevorzugt um ein Material handeln, dessen Grundgerüst aus anorganischem Oxid oder einem Komposit aus anorganischem Oxid und organischen Gruppen besteht. Zum Beispiel kann das Material 10 -O₍₄₋ₓ₎Si(CH₃)ₓ-Gruppen aufweisen, welche in ein SiO₂-Gerüst integriert sind und zusätzlich ein oder mehrere Methylgruppen aufweisen.

Beim Material 10 kann es sich beispielsweise auch um ein Material handeln, welches nur auf SiO₂ basiert und die organische -O₍₄₋ₓ₎Si(CH₃)ₓ-Gruppen aufweist. Bei einer besonders bevorzugten Ausführungsvariante des Materials 10 handelt es sich bei diesem um ein periodisch mesoporöses Material, bevorzugt aus SiO₂. Beispiele dafür sind MCM-41, MCM-48, SBA-1 oder SBA-2 und dergleichen mehr. Die vorliegende Periodizität bedingt ein großes Porenvolumen 20 und eine enge Porenradienverteilung, welche eine sehr definierte Kapillarkondensation ermöglicht, d.h. einen engen Kapillarkondensationsbereich definiert. Hier ist die Speicherdichte optimal, weil diese Materialien 10, sofern sie von guter Qualität sind, ausschließlich solche Poren 12 aufweisen, die für die Ammoniak-Speicherung als Flüssigphase benötigt werden.

Bei der Funktionalisierung 16 des Materials 10 handelt es sich um dessen chemische Funktionalisierung 16, so dass eine Affinität des Materials 10 zu Ammoniak (NH₃) erzielt wird. Die Funktionalisierung 16 kann wie folgt realisiert sein.

In einer ersten Ausführungsvariante der Funktionalisierung 16 kann die Oberfläche der Porenwand der Poren 12 des Materials 10 mit polaren, hydrophilen Gruppen ausgestattet sein, die bevorzugt die Fähigkeit aufweisen, Wasserstoffbrücken zu bilden. Beispielsweise für derartige polare, hydrophile Gruppen sind N-Aminoethyl-3-Aminopropyl-, Bis(N-Hydroxyethyl)-3-Aminopropyl-, N-Propyl-Gloconamid, hydroxymethyl- oder Propyltrimethylammoniumchlorid.

In einer zweiten Ausführungsvariante kann die Oberfläche der Porenwand, die die Poren 12 begrenzt, mit sauren Gruppen ausgestattet sein. Beispielsweise sei in diesem Zusammenhang Carbonsäuregruppen, Sulfon- oder Phosphorsäuregruppen genannt. Des Weiteren sind hierfür auch Aluminium-, oder Eisen(III)-Spezies, die als metallische Kationensäuren fungieren sowie saure Alumosilicatespezies geeignet.

In einer dritten Ausführungsvariante kann die Oberfläche der Porenwand, die die Poren 12 des Materials 10 begrenzt, mit Gruppen ausgestattet werden, die eine spezielle Bindung zu Ammoniak eingehen. Dies können zum Beispiel Kobalt-, Nickel-, Kupfer- und Zinkspezies sein.

Bei der zweiten und dritten vorstehend genannten Ausführungsvariante ist eine monomolekulare Schicht günstig, beispielsweise aus einem Material wie Kupfer. Eine derartige monomolekulare Schicht kann zum Beispiel mittels der Atomic Layer Deposition (ALD-Verfahren) oder mittels nasschemischer Imprägnierung aufgebracht werden.

Derartige Materialien 10 können äußerst kostengünstig realisiert werden. Im Falle periodisch mesoporöser Materialien sind neben einer Silica-Quelle, wie beispielsweise Natrium-Wasserglas, handelsübliche Tenside erforderlich.

Um das erfindungsgemäße Material 10 in einem Speicher für Ammoniak einzusetzen, ist das Material 10 in einem Tank untergebracht, der beheizbar ist. Weist das Material 10 zum Beispiel ein Porenvolumen 20 von 0,7 cm³/g auf, dann kann 1 kg dieses Materials 10 ungefähr 700 ml flüssigen Ammoniak enthalten. Dies ist die Folge des Phänomens der Kapillarkondensation. Bei Zeolithen, die kleinere Poren haben und entsprechend auch deutlich geringere Porenvolumina 20, ist die Speicherdichte für Ammoniak im Vergleich signifikant geringer.

Ammoniak (NH₃) hat einen Dampfdruck von etwa 8 bar bei einer Temperatur von 20°C und einen Dampfdruck von ca. 40 bar bei einer Temperatur von 80°C. Bei Materialien 10, die kleine Poren 12 aufweisen, zum Beispiel mit einem Durchmesser von 2 nm und einer chemisch Ammoniak-affinen Funktionalisierung 16 auf der Porenwand findet zum Beispiel eine Kondensation bei 0,08-fachen des Kondensationsdruckes statt. Dies sind bei einer Temperatur von 20°C etwa 0,64 bar und bei einer Temperatur von 80°C etwa 3,2 bar. Durch die Beheizung des Tankes kann der Ammoniakdruck während des Betriebs auf einen technisch angemessenen Level gehalten werden.

Der Tank, in dem das Material 10 untergebracht ist, umfasst beispielsweise eine Zuleitung, in der der Tank mit Ammoniak betrankt wird, sowie eine Ableitung, bei der Ammoniak während des Betriebes entweicht. Die Ableitung ist mit einem Abgastrakt einer Verbrennungskraftmaschine, deren Abgas zu behandeln ist, verbunden. Zwischen dem Tank, in dem das erfindungsgemäß vorgeschlagene Material 10 untergebracht ist, und dem Abgastrakt befindet sich mindestens eine Vorrichtung, um Ammoniak zu dosieren. Es hat sich als günstig erwiesen, den das Ammoniak bevorratenden Tank in einen großen und einen kleinen Teiltank zu unterteilen, die optional mit einer abschließbaren Leitung (beispielsweise mit einem Ventil versehen) verbunden sind. Der kleinere Teiltank der beiden Teiltanks kann bei Bedarf rasch auf eine Betriebstemperatur gebracht werden.

Der kleinere der beiden Teiltanks befindet sich bevorzugt direkter am Abgastrakt, verglichen mit dem großen Teiltank des Tanks.

Ein weiteres Ausführungsbeispiel des erfindungsgemäß vorgeschlagenen Materials 10 ist durch ein MCM-48-Material gegeben, welches ohne Funktionalisierung 16 Poren 12 mit einem realen Porendurchmesser von 1,6 nm (nach BJH-Methode) aufweist. Die Funktionalisierung erfolgt mit N-Aminoethyl-3-Aminopropyl-Gruppen, so dass diese organischen Gruppen etwa 15 % bis 20 % des Materialgewichtes ausmachen.

Ein weiteres Ausführungsbeispiel des erfindungsgemäß vorgeschlagenen Materials ist beispielsweise durch ein MCM-48-Material gegeben, welches ohne Funktionalisierung 16 Poren 12 von 1,6 nm Durchmesser (gemäß BJH-Methode) aufweist. Die Funktionalisierung besteht primär mit Propylenbromid-Gruppen, die an Silicium-Atomen, welche in das Gerüst des Materials 10 eingebunden sind, hängen. Die Silizium-Umgebung kann angegeben werden als Br(CH₂)₃SiO₃. Diese Propylenbromid-Gruppen sind wiederum mit 1-Amino-Propandiol-Gruppen funktionalisiert. Diese organischen Gruppen machen etwa 20 % des Materialgewichts des Materials 10 aus.

Das Material 10 wird bevorzugt in einem Kraftfahrzeug eingesetzt, welches eine Verbrennungskraftmaschine enthält, deren Abgasnachbehandlung im Wege der selektiven katalytischen Reaktion unter Einsatz von Ammoniak (NH₃) erfolgt.

Die Erfindung ist nicht auf die hier beschriebenen Ausführungsbeispiele und die darin hervorgehobenen Aspekt beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Material (10) zur Speicherung von Ammoniak (NH₃), **dadurch gekennzeichnet, dass** das Material (10) Poren (12) aufweist, deren realer Porendurchmesser (14) bei frei von einer Funktionalisierung vorliegenden Porenwänden der Poren (12), zwischen 1,5 nm und 10 nm liegt, in denen NH₃ bei reduziertem Druck speicherbar ist.

2. Material (10) gemäß Anspruch 1, **dadurch gekennzeichnet, dass** der reale Porendurchmesser (14) bei frei von einer organischen oder anorganischen Funktionalisierung vorliegenden Porenwänden der Poren (12) bevorzugt zwischen 2 nm und 5 nm liegt.

3. Material (10) gemäß Anspruch 1 oder 2, **dadurch gekennzeichnet, dass** ein Porendurchmesser (18) nach einer Funktionalisierung (16) der Porenwände der Poren (12) zwischen 0,5 nm und 5 nm liegt, bevorzugt zwischen 1,0 nm und 3,0 nm.

4. Material (10) gemäß Anspruch 3, **dadurch gekennzeichnet, dass** das Material (10) nach einer Funktionalisierung (16) der Porenwände der Poren (12) ein Porenvolumen (20) von mindestens 0,3 cm³/g, bevorzugt zwischen 0,45 cm³/g und besonders bevorzugt von mindestens 0,6 cm³/g aufweist.

5. Material (10) gemäß einem der vorhergehenden Ansprüche, **dadurch gekennzeichnet, dass** das Material (10) ein Grundgerüst aus organischem Oxid oder einem Komposit aus organischem Oxid und organischen Gruppen aufweist.

6. Material (10) gemäß dem vorhergehenden Anspruch, **dadurch gekennzeichnet, dass** das Material (10) -O₍₄₋ₓ₎Si(CH₃)ₓ-Gruppen aufweist, die in ein SiO₂-Gerüst integriert sind und/oder mindestens eine Methylgruppe enthalten.

7. Material (10) gemäß einem der vorhergehenden Ansprüche, **dadurch gekennzeichnet, dass** das Material (10) auf SiO₂-Basis basiert und -O₍₄₋ₓ₎Si(CH₃)ₓ-Gruppen enthält.

8. Material (10) gemäß einem der Ansprüche 1 bis 4, **dadurch gekennzeichnet, dass** das Material (10) ein periodisch mesoporöses Material, bevorzugt auf SiO₂-Basis ist, welches -O₍₄₋ₓ₎Si(CH₃)ₓ-Gruppen enthält.

9. Material (10) gemäß Anspruch 3 oder 4, **dadurch gekennzeichnet, dass** dieses durch Funktionalisierung (16) eine Affinität zu Ammoniak (NH₃) aufweist.

10. Material (10) gemäß Anspruch 9, **dadurch gekennzeichnet, dass** die Oberfläche der Porenwand des Materials (10) mit polaren, oder hydrophilen Gruppen versehen ist, die die Fähigkeit aufweisen Wasserstoffbrückenbindungen zu bilden, ausgewählt aus einer Gruppe mit: N-Aminoethyl-3-aminopropyl-, Bis(N-Hydroxyethyl)-3-aminopropyl-, N-Propyl-Gluconamid, Hydroxymethyl- oder Propyltrimethylammoniumchlorid.

11. Material (10) gemäß Anspruch 9, **dadurch gekennzeichnet, dass** die Oberfläche der Porenwände des Materials (10) mit sauren Gruppen ausgestattet ist, ausgewählt aus der Gruppe der Carbonsäuregruppen, Sulfon- oder Phosphonsäuregruppen, oder Aluminium-, Eisen(III)-Spezies, die als Kationensäuren dienen oder Alumosilicatspezies enthalten.

12. Material (10) gemäß Anspruch 9 **dadurch gekennzeichnet, dass** die Oberfläche der Porenwände des Materials (10) mit Gruppen versehen ist, die eine Bindung zu Ammoniak eingehen, ausgewählt aus der Gruppe enthaltend Kobalt-, Nickel-, Kupfer- und Zinkspezies.

13. Material (10) gemäß Anspruch 11 oder 12, **dadurch gekennzeichnet, dass** das Material eine monomolekulare Schicht umfasst, welches per ALD-Verfahren oder mittels nasschemischer Imprägnierung aufgebracht ist.

14. Material (10) gemäß Anspruch 8, **dadurch gekennzeichnet, dass** das periodisch mesoporöse Material Natrium-Wasserglas und/oder handelsübliche Tenside enthält.

15. Ammoniakspeicher, ein Material (10) gemäß einem der Ansprüche 1 bis 14 enthaltend, **dadurch gekennzeichnet, dass** ein Druckniveau im Ammoniakspeicher bei einem Druckniveau liegt, welches eine Kapillarkondensation des Ammoniaks ermöglicht und der Ammoniakspeicher beheizbar ist.

16. Verwendung des Materials (10) gemäß einem der Ansprüche 1 bis 14 in einem Ammoniakspeicher zur Speicherung von Ammoniak in der Flüssigphase.
